(19)

**Europäisches Patentamt**

**European Patent Office**

**Office européen des brevets**

(11) **EP 2 639 056 A1**

(12) **EUROPEAN PATENT APPLICATION**

(43) Date of publication:
**18.09.2013 Bulletin 2013/38**

(51) Int Cl.:
**B32B 5/12** (2006.01)        **B32B 15/08** (2006.01)
**C08G 18/78** (2006.01)      **C08J 5/12** (2006.01)

(21) Application number: **12159070.7**

(22) Date of filing: **12.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bayer Intellectual Property GmbH 40789 Monheim (DE)**

(72) Inventors:
• **Arntz, Hans-Detlef**
  **51368 Leverkusen (DE)**
• **Felske, Ernst**
  **51368 Leverkusen (DE)**

• **Hagen, Torsten**
  **51368 Leverkusen (DE)**
• **Struppek, Wolfgang**
  **51368 Leverkusen (DE)**
• **Schmidt, Manfred**
  **51368 Leverkusen (DE)**
• **Braak, Johannes**
  **51368 Leverkusen (DE)**

(74) Representative: **BIP Patents c/o Bayer Intellectual Property GmbH Creative Campus Monheim Alfred-Nobel-Straße 10 40789 Monheim (DE)**

(54) **Process for the production of a foam composite element**

(57)    The invention relates to a process for the production of a foam composite element, comprising the steps of providing a facing, applying adhesion promoter to the facing, and applying a foam layer comprising polyurethane and/or polyisocyanurate to the adhesion promoter, characterised in that the adhesion promoter comprises allophanate-modified polyisocyanate which is obtained by reacting a) at least one polyisocyanate and b) at least one compound selected from the group consisting of polyether and polyester. The invention relates further to the use of allophanate-modified polyisocyanate as adhesion promoter in the production of foam composite elements, and to foam composite elements obtained by the process according to the invention.

EP 2 639 056 A1

**Description**

The invention relates to a process for the production of a foam composite element, comprising the steps of providing a facing, applying adhesion promoter to the facing, and applying a foam layer comprising polyurethane and/or polyisocyanurate to the adhesion promoter, characterised in that the adhesion promoter comprises allophanate-modified polyisocyanate. The invention relates further to the use of allophanate-modified polyisocyanate as adhesion promoter in the production of foam composite elements, and to foam composite elements obtained by the process according to the invention.

For the continuous production of metal sandwich elements based on rigid polyurethane foams, that is to say both rigid polyurethane and rigid polyisocyanurate foams, the adhesion of the metallic facing to the foam is important, in particular when the foam is a polyisocyanurate foam. Two-component polyurethane adhesion promoter systems are established on the market. The adhesion is in principle markedly improved by the use of such two-component adhesion promoter systems, which for the manufacturers of finished components means an improved product. In particular, the long-term risks of adhesion failure are considerably reduced.

However, difficulties with adequate homogenisation of the adhesion promoter components can occur during the processing of such two- component adhesion promoter systems. Inadequate homogenisation can mean a high risk in terms of the long- term bond properties of the metal composite elements in that failure of the adhesion of the facing to the foam can occur in the case of fluctuating temperatures. Furthermore, processing of a two- component adhesion promoter system can mean relatively high rejections at the beginning of a production phase.

In order to avoid the risk of inadequate bond properties owing to inadequate homogenisation of the two adhesion promoter components, one-component solutions are provided. For example, EP 1 516 720 A1 discloses the use of a polyurethane adhesion promoter for improving the adhesion between the layers of a composite element containing a polyisocyanurate foam and facings, as well as the composite elements as such and a process for their production.

EP 1 593 438 A2 discloses a device and a process for the production of sandwich composite elements. The device consists at least of two feed devices for facings, to which there are connected, one behind the other, an application device for an adhesion promoter, an application device for a core layer, a conveyor device and a deflection device. The application device for the adhesion promoter consists at least of a feed line for the adhesion promoter, a rotary plate having at least one lateral outlet opening, and a drive for the rotary plate. There can be used as adhesion promoter one-component systems, for example based on polyurethane, such as prepolymers containing NCO groups. Further possible one-component systems are based on polychloroprene, epoxide or polyvinyl acetate. The adhesion promoter can also be composed of a multi-component system, preferably of a two-component system. Preferred two-component systems are polyurethane systems.

WO 2011/015299 A1 relates to a method for producing a foam composite element, comprising the steps of providing a cover layer, the applying of a bonding agent and the applying of a foam material layer comprising polyurethane and/or polyisocyanurate to the bonding agent, wherein the bonding agent is selected from the group comprising polyether polyol, polymer polyol, polyurea dispersion, polyester polyol and PIPA polyol.

WO 2010/136126 A1 relates to a method for producing a foam composite element, comprising the steps of providing a cover layer, the applying of a bonding agent and the applying of a foam material layer comprising polyurethane and/or polyisocyanurate to the bonding agent, wherein the bonding agent comprises a modified polyisocyanate.

A constant object is to improve the adhesion between the foam and the facings in foam composite elements. Consequently, there is a need for alternative and improved processes for the production of such composite elements, which in particular permit improved adhesion between the foam and the facings in foam composite elements by using relatively small amounts of adhesion promoter.

The invention therefore provides a process for the production of a foam composite element, comprising the steps:

A) providing a facing;
B) applying adhesion promoter to the facing; and
C) applying a foam layer comprising polyurethane and/or polyisocyanurate to the adhesion promoter,

whereby the adhesion promoter comprises allophanate-modified polyisocyanate which is obtained by reacting a) at least one polyisocyanate and b) at least one compound selected from the group consisting of polyether and polyester.

In another embodiment, the invention provides a process for the production of a foam composite element, comprising the steps:

A) providing a facing;
B) applying adhesion promoter to the facing; and
C) applying a foam layer comprising polyurethane and/or polyisocyanurate to the adhesion promoter,

whereby the adhesion promoter comprises allophanate-modified polyisocyanate which is obtained by reacting a) at least one polyisocyanate and b) at least one compound selected from the group consisting of polyether and polyester.

It has been found that by using allophanate-modified polyisocyanate as adhesion promoter which is obtained by reacting a) at least one polyisocyanate and b) at least one compound selected from the group consisting of polyether and polyester, the adhesion of the foam to the facing could be improved as compared with known systems. Preferably the allophanate-modified polyisocyanate has a content of urethane groups which is less than 0,5 % by weight, more preferably less than 0,3 % by weight. According to the present invention, therefore, no further adhesion promoter is used in addition to the adhesion promoter according to the invention, which comprises allophanate-modified polyisocyanate. By using only the adhesion promoters according to the invention it is possible in particular to avoid problems which are otherwise caused by inadequately mixed two-component adhesion promoter systems. Inadequately mixed adhesion promoter systems would lead to blister formation or to predetermined breaking points in the composite material. Advantageously, the sole use of allophanate-modified polyisocyanatealso which is obtained by reacting a) at least one polyisocyanate and b) at least one compound selected from the group consisting of polyether and polyester enables the whole surface of the facing to be wetted.

The foam composite elements produced according to the invention are suitable in particular as heat insulating elements.

Step A) of the process according to the invention relates to the provision of a facing. This can take place in continuous production plants, for example by unrolling a rolled-up facing from a roll. The nature of the facing is not specified further for the present, it being possible preferably to use the materials conventionally used for facings in the heat insulation sector. The thickness of the facing can be, for example, from $\geq 200\ \mu m$ to $\leq 5$ mm, preferably from $\geq 300\ \mu m$ to $\leq 2$ mm and particularly preferably from $\geq 400\ \mu m$ to $\leq 1$ mm.

In step B), the adhesion promoter according to the invention is applied to a facing which has been provided. Application can be carried out using conventional techniques such as, for example, spraying, roller application or rotating disk. The adhesion promoter according to the invention comprises allophanate-modified polyisocyanate. Preferably, the adhesion promoter according to the invention consists of allophanate-modified polyisocyanate.

Preferably, the adhesion promoter according to the invention has a viscosity, measured according to DIN 53019 at a temperature of 25°C, in the range from 200 to 30, 000 mPa.s, particularly preferably in the range from 200 to 20, 000 mPa.s, most particularly preferably in the range from 500 to 5, 000 mPa.s.

The allophanate-modified polyisocyanate preferably has an NCO group content of 10 % to 25 % by weight, more preferably of 12 % to 25 % by weight, most preferably of 14 % to 23 % by weight.

Preferably the polyisocyanate a) is selected from the group consisting of aliphatic polyisocyanate, aromatic polyisocyanate and cycloaliphatic polyisocyanate. The polyisocyanate a) preferably has an NCO group content of 20 % to 70 % by weight, more preferably of 25 % to 65 % by weight, most preferably of 30 % to 60 % by weight.

More preferably the polyisocyanate a) is selected from the group consisting of tolylene diisocyanate (TDI), diphenylmethane diisocyanate (MDI) and mixtures of diphenylmethane diisocyanate and polyphenylenepolymethylene polyisocyanates (crude MDI).

Most preferably the polyisocyanate a) is a mixture of diphenylmethane diisocyanate and polyphenylenepolymethylene polyisocyanates, preferably having an NCO content of from 20 % to 40 % by weight, more preferably having an NCO content of from 22 % to 35 % by weight. This mixture preferably has a proportion of 2-ring MDI of 60 % to 95 % by weight, a proportion of 3-ring MDI of 5 % by weight to 25 % by weight and a proportion of 4-ring MDI of 2 % by weight to 12 % by weight, whereby the mixture further contains higher homologues.

Preferably the compound b) has a functionality of 2 to 8, more preferably of 2 or 3. Preferably the compound b) has a hydroxyl value determined according to DIN 53240 of 20 to 800 mg KOH/g, more preferably of 20 to 100 mg KOH/g, most preferably of 30 to 60 mg KOH/g. Preferably the compound b) has a weight average molecular weight of 1800 to 15000 g/mol.

Polyether polyols are prepared by a known process. This is carried out, for example, by anionic polymerisation with alkali hydroxides, such as sodium or potassium hydroxide, or with alkali alcoholates, such as sodium methylate, sodium or potassium methylate or potassium isopropylate, as catalysts and with the addition of at least one starter molecule which contains from 2 to 8 reactive hydrogen atoms, preferably from 2 to 3 reactive hydrogen atoms, bonded therein, for the preparation of polyoxyalkylene polyols, or by cationic polymerisation with Lewis acids, such as antimony pentachloride, boron trifluoride etherate, etc. or bentonite as catalysts from one or more alkylene oxides having from 2 to 4 carbon atoms in the alkylene moiety.

Alkylene oxides which are suitable according to the invention are, for example, ethylene oxide, 1,2-propylene oxide, tetrahydrofuran, 1,3-propylene oxide, 1,2- and 2,3-butylene oxide, and preferably ethylene oxide and 1,2-propylene oxide. The alkylene oxides can be used on their own, alternately in succession, or in the form of mixtures.

As starter molecules there are preferably used compounds selected from the group consisting of water, organic dicarboxylic acids, such as succinic acid, adipic acid, phthalic acid and terephthalic acid, aliphatic and aromatic, optionally N- mono-, N, N- and N, N'- dialkyl- substituted diamines having from 1 to 4 carbon atoms in the alkyl moiety, such as optionally mono- and di- alkylene- substituted ethylenediamine, diethylenetriamine, triethylenetetramine, 1, 2- propyleneamine, 1, 3- and 1, 4- butylenediamine, 1, 2-, 1, 3-, 1, 4-, 1, 5- and 1, 6- hexamethylenediamine, phenylenediamine, 2, 3-, 3, 4-, 2, 4- and 2, 6- toluylenediamine and 4, 4'-, 2, 4'- and 2, 2'- diaminodiphenylmethane, alkanolamine, such as, for example, ethanolamine, N- methyl- and N- ethyl- ethanolamine, dialkanolamines, such as, for example, diethanolamine, N- methyl- and N- ethyl- diethanolamine, and trialkanolamines, such as, for example, triethanolamine, and ammonia. Preference is given to the use of polyhydric, in particular di- to octa- hydric, alcohols and/or alkylene glycols, such as, for example, ethanediol, 1, 2- and 1, 3- propanediol, diethylene glycol, dipropylene glycol, 1, 4- butanediol, 1, 6- hexanediol, glycerol, trimethylolpropane, pentaerythritol, sorbitol and sucrose, and mixtures of at least two polyhydric alcohols.

As polyether polyols there can also be used copolymers which can be prepared by addition of alkylene oxides and a further monomer (such as, for example, anhydrides, carbon dioxide) to starter molecules, such as, for example, polyether carbonate polyols. The preparation of polyether carbonate polyols by catalytic addition of alkylene oxides and carbon dioxide to H-functional starter molecules is described, for example, in Inoue et al., Copolymerization of Carbon Dioxide and Epoxide with Organometallic Compounds; Die Makromolekulare Chemie 130, 210-220, 1969.

The polyether polyols are preferably polyoxypropylene and polyoxypropylene-polyoxyethylene polyols. Preferably the polyether polyols have a functionality of 2 to 8, more preferably of 2 or 3. Preferably the polyether polyols have a hydroxyl value determined according to DIN 53240 of 20 to 800 mg KOH/g, more preferably of 20 to 100 mg KOH/g, most preferably of 30 to 60 mg KOH/g. Preferably the polyether polyols have a weight average molecular weight of 1800 to 15000 Dalton g/mol.

Preferably, the polyether polyol has a viscosity, measured according to DIN 53015 at a temperature of 25°C, in the range from 200 to 30, 000 mPa.s, particularly preferably in the range from 200 to 20, 000 mPa.s, most particularly preferably in the range from 200 to 10, 000 mPa.s.

Suitable polyester diols may be produced for example from dicarboxylic acids with 2 to 12 carbon atoms, preferably 4 to 6 carbon atoms and polyhydric alcohols. Examples of suitable dicarboxylic acids are: aliphatic dicarboxylic acids such as succinic acid, glutaric acid, adipic acid, suberic acid, azelaic acid and sebacic acid, and aromatic dicarboxylic acids such as phthalic acid, isophthalic acid and terephthalic acid. The dicarboxylic acids may be used individually or as mixtures, for example in the form of a mixture of succinic, glutaric and adipic acids. For the production of the polyester diols it may possibly be advantageous to use, instead of the dicarboxylic acids, the corresponding dicarboxylic acid derivatives such as carboxylic acid diesters with 1 to 4 carbon atoms in the alcohol radical, carboxylic acid anhydrides or carboxylic acid chlorides. Examples of polyhydric alcohols are glycols with 2 to 10, preferably 2 to 6 carbon atoms, such as ethylene glycol, diethylene glycol, 1, 4- butanediol, 1, 5- pentanediol, 1, 6- hexanediol, 1, 10- decanediol, 2, 2- dimethyl- 1, 3- propanediol, 1, 3- propanediol and dipropylene glycol. Depending on the desired properties the polyhydric alcohols may be used alone or optionally in the form of a mixture with one another. Also suitable are esters of carbonic acid with the aforementioned diols, in particular those with 4 to 6 carbon atoms, such as 1, 4- butanediol or 1, 6- hexanediol, or condensation products of hydroxycarboxylic acids, for example hydroxycaproic acid and polymerisation products of lactones, for example optionally substituted caprolactones. As polyester diols there are preferably used ethanediol polyadipate, 1, 4- butanediol polyadipate, ethanediol- 1, 4- butanediol polyadipate, 1, 6- hexanediol neopentyl glycol polyadipate, 1, 6- hexanediol- 1, 4- butanediol polyadipate and ethylene glycol polyadipate.

For the preparation of the polyester polyols, the organic, for example aromatic and preferably aliphatic dicarboxylic acids and/or their derivatives and the polyhydric alcohols and/or alkylene glycols can be polymerised without a catalyst or, preferably, in the presence of transesterification catalysts, advantageously in an atmosphere of inert gases, such as, for example, nitrogen, helium, argon, etc., in the melt at temperatures of from 150 to 250°C, preferably from 180 to 220°C, optionally under reduced pressure, to the desired acid number, which is advantageously less than 10, preferably less than 2.

According to a preferred embodiment, the esterification mixture is polycondensed at the above-mentioned temperatures to an acid number of from 80 to 30, preferably from 40 to 30, under normal pressure and then under a pressure of less than 500 mbar, preferably from 50 to 150 mbar. There come into consideration as transesterification catalysts, for example, iron, cadmium, cobalt, lead, zinc, antimony, magnesium, titanium and tin catalysts in the form of metals, metal oxides or metal salts. The polycondensation can, however, also be carried out in liquid phase in the presence of diluents and/or entrainers, such as, for example, benzene, toluene, xylene or chlorobenzene, for azeotropic distillation of the water of condensation.

For the preparation of the polyester polyols, the organic dicarboxylic acids and/or their derivatives and the polyhydric alcohols are advantageously polycondensed in a molar ratio of 1:1 to 1.8, preferably 1:1.05 to 1.2.

Preferably, the polyester polyol has a viscosity, measured according to DIN 53015 at a temperature of 25°C, in the range from 200 to 30, 000 mPa.s, particularly preferably in the range from 200 to 20, 000 mPa.s, most particularly preferably in the range from 200 to 10, 000 mPa.s.

Preferably the polyester polyols have a functionality of 2 to 3. Preferably the polyester polyols have a hydroxyl value determined according to DIN 53240 of 20 to 800 mg KOH/g, more preferably of 20 to 100 mg KOH/g, most preferably of 30 to 60 mg KOH/g. Preferably the polyester polyols have a weight average molecular weight of 1800 to 15000 g/mol.

Preferably the allophanate- modified polyisocyanate is obtained by reacting component a) and component b) in the presence of a suitable allophanate catalyst. Suitable allophanate catalyst to be used in accordance with the present invention include any known catalyst which is capable of promoting the allophanate reaction between polyisocyanate and compounds containing at least two active hydrogen- containing groups that are reactive with isocyanate. Preferably the allophanate catalysts is selected from the group consisting of zinc compounds, stannous octoate, tetraalkylammonium compounds, such as N, N, N- trimethyl- N- 2- hydroxy- propylammonium hydroxide, N, N, N- trimethyl- N- 2- hydroxypropyl-ammonium 2- ethylhexanoate and choline 2- ethylhexanoate.

Suitable zinc compounds include any organic or inorganic zinc compounds, such as zinc oxide, zinc sulphide, zinc carbonate, zinc fluoride, zinc chloride, zinc bromide, zinc iodide, zinc phosphate, zinc borate, zinc titanate, zinc hexafluorosilicate, zinc sulphite, zinc sulphate, zinc nitrate, zinc tetrafluoroborate, zinc acetate, zinc octoate, zinc cyclohexanebutyrate, zinc laurate, zinc palmitate, zinc stearate, zinc beherate, zinc citrate, zinc gluconate, zinc acetylacetonate, zinc 2, 2, 6, 6- tetramethyl- 3, 5- heptanedionate, zinc trifluoracetate, zinc trifluoromethane- sulphonate, zinc dimethyldithiocarbamate and mixtures of these compounds. More preferably the allophanate catalyst is zinc octoate and/or zinc acetylacetonate. Preferably, zinc compounds are exclusively used as allophanate catalyst. Typically, the allophanate catalyst is present in an amount ranging from 25 to 200 ppm, based on the weight of polyisocyanate.

Preferably the reaction between component a) and component b) in the presence of a suitable allophanate catalyst is stopped when a predetermined NCO content of the allophanate- modified polyisocyanate is obtained by using suitable catalyst stoppers. Suitable catalyst stoppers are selected from the group consisiting of benzoyl chloride, hydrochloric acid and di (2- ethylhexyl) phosphate. Benzoyl chloride is a preferred stopper. When present, the stopper is typically added in an amount that is equal to about twice the weight of the allophanate catalyst.

Preferably the reaction between component a) and component b) is carried out at a ratio of the number of NCO groups to the number active hydrogen-containing groups that are reactive with isocyanate in the range of 8:1 to 35:1, more preferably in the range of 10:1 to 30:1.

The thickness of the layer of adhesion promoter can be, for example, from $\geq 10$ $\mu$m to $\leq 500$ $\mu$m, preferably from $\geq 20$ $\mu$m to $\leq 200$ $\mu$m and particularly preferably from $\geq 25$ $\mu$m to $\leq 100$ $\mu$m.

The use of allophanate-modified polyisocyanate as adhesion promoter allows interruptions in the production of foam composite elements without a larger amount of rejects being produced as a result. While conventional adhesion promoters based on 2-component systems are completely reacted after a short time, allophanate-modified polyisocyanates are not reactive in themselves or with themselves. Advantageously, the production of foam composite elements can therefore be stopped, if problems occur in the production process, without large amounts of material having to be discarded.

In step C), a foam layer comprising polyurethane and/or polyisocyanurate is applied to the layer of adhesion promoter. This can also be carried out in a continuous production plant. This layer can be present, for example, in a thickness from $\geq 2$ cm to $\leq 28$ cm, from $\geq 3$ cm to $\leq 26$ cm and preferably from $\geq 3$ cm to $\leq 24$ cm. It is possible to mix the reaction components in a mixing head immediately prior to application and to apply the reaction mixture that yields the foam directly to the layer of the adhesion promoter. The use of foams comprising polyisocyanurate or predominantly polyisocyanurate in particular is advantageous because they have good flame retardant properties even with a reduced content of flame-retarding agents.

The conventional aliphatic, cycloaliphatic and in particular aromatic polyisocyanates are used for the production of the foam layer. Preference is given to the use of toluene diisocyanate (TDI), diphenylmethane diisocyanate (MDI) and, in particular, mixtures of diphenylmethane diisocyanate and polyphenylenepolymethylene polyisocyanates (crude MDI). Preferably these polyisocyanates do not contain any allophanate groups. Suitable compounds having at least two hydrogen atoms reactive towards isocyanate groups are generally those which carry in the molecule two or more reactive groups selected from OH groups, SH groups, NH groups, $NH_2$ groups and CH-acidic groups such as $\beta$-diketo groups. Preference is given to the use of polyetherols and/or polyesterols, with polyether polyols being preferred. The hydroxyl number of the polyetherols and/or polyesterols used is preferably from 25 to 800 mg KOH/g determined according to DIN 53240, the weight average molecular weight is generally greater than 400 g/mol.

It is possible for the foam layer, which is generally also to be understood as meaning the foam of the foam layer, to have a closed cell content of from $\geq 85\%$ to $\leq 100\%$, preferably from $\geq 90\%$ to $\leq 100\%$, which can be determined according to DIN ISO 4590. Furthermore, the foam layer can have a mean cell diameter according to ASTM 3576-77 of from $\geq 10$ $\mu$m to $\leq 600$ $\mu$m, preferably from $\geq 50$ $\mu$m to $\leq 400$ $\mu$m.

Of course, it is possible in the process according to the invention, after step C), to apply a further layer of the adhesion promoter as in step B) to an additional facing and then apply this facing to the foam layer. A foam composite element provided with a facing on both sides is then obtained. The process can be carried out in a conventional twin-belt installation, for example.

In an embodiment of the present invention, the material of the facing comprises aluminium, steel, bitumen, paper, mineral nonwovens, nonwovens comprising organic fibres, plastics sheets, plastics films and/or wood plates. It is particularly preferred for the facing to be aluminium metal or steel. The facing, in particular the aluminium or steel, can be coated. The adhesion promoters used according to the invention result in particularly good adhesion in particular between a polyisocyanurate foam and an aluminium facing or a steel facing.

In a further embodiment of the process according to the invention, the adhesion promoter is applied to the facing in an amount of from $\geq 20$ g/m$^2$ to $\leq 50$ g/m$^2$. This represents a reduction in the required amount of adhesion promoter as compared with known processes. The amount of adhesion promoter applied to the facing can also be within a range from $\geq 25$ g/m$^2$ to $\leq 35$ g/m$^2$. Overall, a saving in terms of material (less adhesion promoter) is accordingly obtained.

In a further embodiment of the process according to the invention, the facing is heated to a temperature of from $\geq 20°C$ to $\leq 70°C$, particularly preferably from $\geq 40°C$ to $\leq 70°C$, after application of the adhesion promoter and of the reaction mixture for producing the foam layer. The reaction of the adhesion promoter with other layers is accelerated by heating of the facing, and a firmer bond is obtained overall. The facing can also particularly preferably be heated to a temperature of from $\geq 30°C$ to $\leq 55°C$ before the adhesion promoter is applied.

In a further embodiment of the process according to the invention, the foam layer is obtainable from the reaction of a polyisocyanate and at least one compound selected from the group consisting of reaction mixtures comprising polyester polyols and polyether polyols, the molar ratio of isocyanate groups to isocyanate-reactive groups (such as, for example, hydroxyl groups) in the reaction mixture before the start of the reaction being from $\geq 1:1$ to $\leq 5:1$. This situation is generally expressed by the index. The index gives the percentage ratio of the amount of isocyanate actually used to the stoichiometric, i.e. calculated, amount of isocyanate (NCO) groups:

$$\text{Index} = [(\text{Amount of isocyanate used}) : (\text{Calculated amount of isocyanate})] \bullet 100 \qquad (I)$$

In other words, the index of this reaction mixture is from 100 to 500. The index can also be from $\geq 150$ to $\leq 350$ or from $\geq 200$ to $\leq 300$. With such indices there are predominantly obtained polyisocyanurate foams which, as already mentioned, contain smaller amounts of flame-retarding agents and can nevertheless, owing to the process according to the invention, be firmly bonded to facings, in particular aluminium facings. The polyisocyanurate foam is preferably a rigid foam, defined on the basis of its compressive strength at 10% compression or from $\geq 10$ kPa to $\leq 300$ kPa. The compressive strength or compressive resistance can be determined according to DIN 53421/DIN EN ISO 604. It can also be within a range from $\geq 150$ kPa to $\leq 250$ kPa or from $\geq 180$ kPa to $\leq 280$ kPa.

In a further embodiment of the process according to the invention, the apparent density of the foam layer is from $\geq 25$ g/l to $\leq 48$ g/l, particularly preferably from $\geq 30$ g/l to $\leq 45$ g/l. Irrespective thereof, it is further also possible for the foam layer, which is generally to be understood as meaning also the foam of the foam layer, to have a closed cell content of from $\geq 85\%$ to $\leq 100\%$, preferably from $\geq 90\%$ to $\leq 100\%$, which can be determined according to DIN ISO 4590. The foam layer can further have a mean cell diameter according to ASTM 3576-77 of from $\geq 10$ $\mu$m to $\leq 600$ $\mu$m, preferably from $\geq 50$ $\mu$m to $\leq 400$ $\mu$m.

The present invention relates further to the use of at least one allophanate-modified polyisocyanate which is obtained by reacting a) at least one polyisocyanate and b) at least one compound selected from the group consisting of polyether and polyester as adhesion promoter in the production of foam composite elements. Details of the allophanate-modified polyisocyanate used as adhesion promoter have already been described above, so that reference can be made thereto in their entirety.

The present invention further provides a foam composite element obtained by a process according to the invention, wherein the adhesion between the facing and the foam layer is from $\geq 0.20$ N/mm$^2$ to $\leq 1.00$ N/mm$^2$, particularly preferably from $\geq 0.20$ N/mm$^2$ to $\leq 0.50$ N/mm$^2$, most particularly preferably from $\geq 0.20$ N/mm$^2$ to $\leq 0.30$ N/mm$^2$. In particular, the foam layer can be a polyisocyanurate foam layer. The adhesion is advantageously measured in accordance with DIN 53292. In practice, a lower limit of 0.20 N/mm$^2$ is regarded as being particularly advantageous for sufficient adhesion.

The invention accordingly also provides a foam composite element containing the layers

($\alpha$) a facing,
($\beta$) an adhesion promoter comprising allophanate-modified polyisocyanate which is obtained by reacting a) at least one polyisocyanate and b) at least one compound selected from the group consisting of polyether and polyester and
($\gamma$) a foam layer comprising polyurethane and/or polyisocyanurate,

wherein the layers are arranged in the sequence ($\alpha$)- ($\beta$)- ($\gamma$) , preferably in the sequence ($\alpha$)- ($\beta$)- ($\gamma$)- ($\beta$)- ($\alpha$) .

<u>Examples</u>

Test methods

The viscosity of the adhesion promoters was determined according to DIN 53019.

The adhesion was tested in accordance with standard DIN 53292. The procedure differs from the tensile test perpendicularly to the plane of the facing according to DIN 53292-82 by the different sample thickness and the number of facings. In the test according to DIN 53292-82, the total thickness of the facings is taken. The weakest region of the sample as a whole thereby determines the fracture site. By contrast, the adhesion test in the modification described here permits side-related assessment of the adhesion. A sample is therefore taken by cutting a composite element perpendicularly to the facings. Square samples having a side length of 50 mm and a height of 15 mm (including the facing) are used in the measurement.

In order to determine faults at the foam/facing interface ("blister formation"), the metal composite element was tempered for 1 hour at 105°C. The upper and/or lower facing of the metal composite element was then removed. It was checked whether collapsed cavities occur in addition to the regular cell structure of the rigid polyurethane foam, what could not be found. The structure of all the tested samples have been fine.

Preparation of the adhesion promoter

The following compounds were used in the examples:

polyol 1: polyether polyol of propylene glycol and propylene oxide having a functionality of 2, and a hydroxyl number of 56 mg KOH/g.

polyol 2: polyether polyol of glycerol, ethylene oxide and propylene oxide having a functionality of 3, a hydroxyl number of 35 mg KOH/g and an ethylene oxide content of 17,5 % by weight

polyol 3: polyester prepared by reacting ethylene glycole and adipic acid having a functionality of 2 and a hydroxyl number of 42 mg KOH/g

polyol 4: polyether polyol of glycerol, ethylene oxide and propylene oxide having a functionality of 3, a hydroxyl number of 37 mg KOH/g and an ethylene oxide content of 73,0 % by weight

polyisocyanate 1: 90,3 % by weight mMDI; 6.8 % by weight 3-ring MDI; 2,9 % by weight 4-ring MDI

polyisocyanate 2: 72,0 % by weight mMDI; 19,5 % by weight 3-ring MDI; 8,5 % by weight 4-ring MDI

A three-neck-flask was charged with the polyisocyanate under nitrogen atmosphere at 80 °C. A mixture of the polyol and the catalyst [zinc octoate, 330 ppm in relation to the overall weight of polyisocyanate and polyol] was slowly added while keeping the temperature at 80 °C. After a period of two hours the NCO content was determined. Benzoyl chloride was added if a predetermined NCO content had been obtained. The adhesion promoters that were thus obtained showed a content of urethane groups below 0,5 % by weight.

Preparation of the foam system

a-component:

Baymer® VP PU 30 HB01 (polyol mixture for the production of polyurethane, obtainable from Bayer Material Science AG)

b-component:

Desmodur® 44V70L (polymeric MDI, obtainable from Bayer MaterialScience AG).

The a- and b-components were mixed together in the ratio a:b = 100:220. For the production of a metal composite element having a thickness of 200 mm, 13,6 parts by weight of pentane were also added as foaming agent, as well as 3,6 parts by weight of Desmorapid® 1221 VN (obtainable from Bayer MaterialScience AG) and 3.6 part by weight of Desmorapid® 1792 (obtainable from Bayer MaterialScience AG) and auxiliary agent VP PU 19IF00A (obtainable from Bayer MaterialScience AG), the parts by weight being based on 100 parts by weight of component A.

The adhesion promoter composition was applied to a steel sheet, preheated to 60°C, using a device as described in EP 1 593 438 A2. The amount of adhesion promoter used is shown in Table 1. A polyisocyanurate foam having the composition mentioned above according to foam system 1 was then applied thereto.

Table shows that the adhesion is significantly increased in case an allophanate-modified polyisocyanate is used (examples 1, 3, 5, 7 and 9) compared to the use of an urethane-modified polyisocyanate as adhesion promoter showing a very similar or identical composition and NCO content.

Table 1

| example | polyol | polyisocyanate | weight ratio | modification | NCO content [%] | viscosity at 25°C | adhesion [N] | amount (g/m$^2$) |
|---|---|---|---|---|---|---|---|---|
| 1 | polyol 1 | polyisocyanate 1 | 38,8 : 61,2 | allophanate | 16,7 | 2230 | 33 | 29 |
| 2 | polyol 1 | polyisocyanate 1 | 43,2 : 56,8 | urethane | 16,7 | 670 | 26 | 26 |
| 3 | polyol 2 | polyisocyanate 1 | 42,0 : 58,0 | allophanate | 16,7 | 2340 | 40 | 30 |
| 4 | polyol 2 | polyisocyanate 1 | 45,0 : 55,0 | urethane | 16,9 | 880 | 27 | 30 |
| 5 | polyol 3 | polyisocyanate 1 | 33,0 : 67,0 | allophanate | 20,1 | 2460 | 33 | 30 |
| 6 | polyol 3 | polyisocyanate 1 | 36,0 : 64,0 | urethane | 20 | 1310 | 31 | 28 |
| 7 | polyol 4 | polyisocyanate 2 | 27,6 : 72,4 | allophanate | 21,1 | 2090 | 35 | 31 |
| 8 | polyol 4 | polyisocyanate 2 | 29,8 : 70,2 | urethane | 21,4 | 850 | 32 | 28 |
| 9 | polyol 4 | polyisocyanate 1 | 29,5 : 70,5 | allophanate | 20,9 | 1070 | 34 | 28 |
| 10 | polyol 4 | polyisocyanate 1 | 31,9 : 68,1 | urethane | 21,5 | 420 | 33 | 26 |

**Claims**

1. Process for the production of a foam composite element, comprising the steps:

   A) providing a facing;
   B) applying adhesion promoter to the facing; and
   C) applying a foam layer comprising polyurethane and/or polyisocyanurate to the adhesion promoter,
   **characterized in that** the adhesion promoter comprises allophanate-modified polyisocyanate which is obtained by reacting a) at least one polyisocyanate and b) at least one compound selected from the group consisting of polyether and polyester.

2. Process according to claim 1, wherein the material of the facing comprises aluminium, steel, bitumen, paper, mineral nonwovens, nonwovens comprising organic fibres, plastics sheets, plastics films and/or wood plates.

3. Process according to claim 1, wherein the allophanate-modified polyisocyanate has an NCO group content of 10 % to 25 % by weight.

4. Process according to claim 1, wherein the polyisocyanate a) is selected from the group consisting of aliphatic polyisocyanate, aromatic polyisocyanate and cycloaliphatic polyisocyanate.

5. Process according to claim 1, wherein the facing is heated to a temperature of from $\geq$ 20°C to $\leq$ 70°C before the adhesion promoter is applied.

6. Process according to claim 1, wherein the foam layer is obtainable from the reaction of a polyisocyanate and at least one compound selected from the group consisting of reaction mixtures comprising polyester polyols and polyether polyols, wherein the molar ratio of isocyanate groups to hydroxyl groups in the reaction mixture at the start of the reaction is from $\geq$ 100:100 to $\leq$ 400:100.

7. Process according to claim 1, wherein the apparent density of the foam layer is from $\geq$ 30 g/l to $\leq$ 48 g/l.

8. Use of at least one allophanate-modified polyisocyanate as adhesion promoter in the production of foam composite elements, **characterized in that** the allophanate-modified polyisocyanate is obtained by reacting

   a) at least one polyisocyanate and
   b) at least one compound selected from the group consisting of polyether and polyester.

9. Use according to claim 8, wherein the allophanate-modified polyisocyanate has an NCO group content of 10 % to 25 % by weight.

10. Foam composite element obtained by a process according to claim 1, wherein the adhesion between the facing and the foam layer is from $\geq$ 0.20 N/mm$^2$ to $\leq$ 1.00 N/mm$^2$.

11. Foam composite element containing the layers ($\alpha$) a facing, ($\beta$) an adhesion promoter comprising at least one allophanate-modified polyisocyanate, and ($\gamma$) a foam layer comprising polyurethane and/or polyisocyanurate, wherein the layers are arranged in the sequence ($\alpha$)-($\beta$)-($\gamma$), **characterized in that** the allophanate-modified polyisocyanate is obtained by reacting a) at least one polyisocyanate and b) at least one compound selected from the group consisting of polyether and polyester.

12. Foam composite element according to claim 11, wherein the layers are arranged in the sequence ($\alpha$)-($\beta$)-($\gamma$)-($\beta$)-($\alpha$).

**EP 2 639 056 A1**

<table>
<tr><td colspan="5" align="center">Europäisches<br>Patentamt<br>European<br>Patent Office<br>Office européen<br>des brevets</td></tr>
</table>

## EUROPEAN SEARCH REPORT

**Application Number**

EP 12 15 9070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2010/136126 A1 (BAYER MATERIALSCIENCE AG [DE]; VAN DE BRAAK JOHANNES [DE]; ABELS RENE) 2 December 2010 (2010-12-02)<br>* page 1, lines 1-11 *<br>* page 3, line 4 - page 3, line 9 *<br>* page 6, lines 7-31 *<br>* claims 1-4, 10, 12, 13 *<br>----- | 1-12 | INV.<br>B32B5/12<br>B32B15/08<br>C08G18/78<br>C08J5/12 |
| Y | EP 2 036 934 A2 (BAYER MATERIALSCIENCE AG [DE]) 18 March 2009 (2009-03-18)<br>* paragraphs [0009], [0013], [0014], [0019], [0021] *<br>* claims 1, 9 *<br>----- | 1-12 | |
| Y | EP 1 398 335 A1 (BAYER POLYMERS LLC [US] BAYER MATERIALSCIENCE LLC [US])<br>17 March 2004 (2004-03-17)<br>* paragraphs [0014] - [0016] *<br>* paragraphs [0031] - [0034] *<br>* paragraphs [0050] - [0056] *<br>----- | 1-12 | |
| | | | **TECHNICAL FIELDS SEARCHED (IPC)**<br><br>B32B<br>C08G<br>C08J |

The present search report has been drawn up for all claims

| Place of search | Date of completion of the search | Examiner |
|---|---|---|
| The Hague | 6 September 2012 | Mayer, Anne |

EPO FORM 1503 03.82 (P04C01)

## ANNEX TO THE EUROPEAN SEARCH REPORT
## ON EUROPEAN PATENT APPLICATION NO.

EP 12 15 9070

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2012

| Patent document cited in search report | | Publication date | Patent family member(s) | | Publication date |
|---|---|---|---|---|---|
| WO 2010136126 | A1 | 02-12-2010 | CN | 102448716 A | 09-05-2012 |
| | | | EP | 2435243 A1 | 04-04-2012 |
| | | | US | 2012121887 A1 | 17-05-2012 |
| | | | WO | 2010136126 A1 | 02-12-2010 |
| EP 2036934 | A2 | 18-03-2009 | AT | 506387 T | 15-05-2011 |
| | | | DE | 102007044034 A1 | 19-03-2009 |
| | | | EP | 2036934 A2 | 18-03-2009 |
| | | | ES | 2363649 T3 | 11-08-2011 |
| | | | US | 2009076228 A1 | 19-03-2009 |
| EP 1398335 | A1 | 17-03-2004 | AT | 328931 T | 15-06-2006 |
| | | | CA | 2439777 A1 | 09-03-2004 |
| | | | CN | 1495212 A | 12-05-2004 |
| | | | DE | 60305818 T2 | 14-06-2007 |
| | | | EP | 1398335 A1 | 17-03-2004 |
| | | | ES | 2265080 T3 | 01-02-2007 |
| | | | HK | 1063058 A1 | 01-08-2008 |
| | | | JP | 4833508 B2 | 07-12-2011 |
| | | | JP | 2004099897 A | 02-04-2004 |
| | | | KR | 20040023544 A | 18-03-2004 |
| | | | MX | PA03007954 A | 15-10-2004 |
| | | | PT | 1398335 E | 31-10-2006 |
| | | | US | 2004049001 A1 | 11-03-2004 |
| | | | US | 2005148754 A1 | 07-07-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1516720 A1
- EP 1593438 A2
- WO 2011015299 A1
- WO 2010136126 A1

**Non-patent literature cited in the description**

- **INOUE et al.** Copolymerization of Carbon Dioxide and Epoxide with Organometallic Compounds. *Die Makromolekulare Chemie,* 1969, vol. 130, 210-220